Europäisches Patentamt

European Patent Office

Office européen des brevets

(11) Veröffentlichungsnummer: **0 209 682**
**A2**

# (12) EUROPÄISCHE PATENTANMELDUNG

(21) Anmeldenummer: 86107483.9

(22) Anmeldetag: 02.06.86

(51) Int. Cl.⁴: **F16F 13/00** , F16F 9/34

(30) Priorität: 25.07.85 DE 3526607

(43) Veröffentlichungstag der Anmeldung:
28.01.87 Patentblatt 87/05

(84) Benannte Vertragsstaaten:
DE FR GB IT SE

(71) Anmelder: **Continental Gummi-Werke Aktiengesellschaft**
**Königsworther Platz 1 Postfach 169**
**D-3000 Hannover 1(DE)**

(72) Erfinder: **Bebermeier, Jürgen**
**Limmerstrasse 15 A**
**D-3000 Hannover 91(DE)**
Erfinder: **Fischer, Werner**
**Moorkamp 57**
**D-3000 Hannover 1(DE)**
Erfinder: **Heitzig, Jürgen**
**Gelbelstrasse 15**
**D-3000 Hannover 1(DE)**
Erfinder: **Eberhard, Günter, Dr.**
**Knüllweg 1**
**D-3007 Gehrden 1(DE)**

(54) **Hydraulisch gedämpftes elastisches Lager.**

(57) Elastische Lager für Motoren, Maschinen und Geräte aller Art sind nach bekannten Vorschlägen mit einer Dämpfungseinrichtung in Form zweier mit einer Dämpfungsflüssigkeit gefüllter und abhängig von den Federbewegungen der elastischen Elemente wechselweise volumenveränderlicher Kammern versehen, wobei die Dämpfungswirkung von dem gedrosselten Überströmen der aus einer Kammer in die andere verdrängten Flüssigkeit hergeleitet wird. Erfindungsgemäß enthält der Überströmweg der Flüssigkeit eine Hohlkammer, in der die eintretende Flüssigkeit in einer spiralig sich verengenden Kreisbahn geführt wird. Die gesteuerte Dynamik der vergleichsweise großen Flüssigkeitsmenge in der Hohlkammer hat einen günstigen Verlauf der Dämpfung über weite Frequenzbereiche zur Folge.

FIG. 2

## Hydraulisch gedämpftes elastisches Lager

Die Erfindung bezieht sich auf hydraulische gedämpfte elastische Lager für Motoren, Maschinen, Geräte u. dgl., insbesondere für den Antriebsmotor in Kraftfahrzeugen, mit einem von gummielastischen Federelementen abgedeckten und durch eine einen Durchströmweg aufweisende Trennwand in zwei mit einer Dämpfungsflüssigkeit gefüllte und wechselweise volumenveränderliche Kammern unterteilten Gehäuse.

Mit der elastischen Lagerung schwingender Massen wird neben einer guten Dämpfung im Eigenfrequenzbereich des Systems auch eine wirksame Isolierung gegen Körperschall auch oberhalb der Eigenfrequenz angestrebt. Da beide Forderungen in befriedigendem Maße mit rein elastischen Gummilagern nicht zu erfüllen sind, hat es sich in der Praxis eingebürgert, üblichen elastomeren Lagern eine hydraulische Dämpfungseinrichtung zuzuordnen und die erzielbare Dämpfung durch Ausnutzen des Tilgereffektes einer zwischen den beiden Kammern des Lagergehäuses - schwingenden Flüssigkeitssäule beträchtlich zu verbessern. Hydraulisch gedämpfte Gummilager solcher Art sind in einer Vielzahl von Konstruktionen bekannt. Es hat sich dabei als vorteilhaft herausgestellt, den in der Regel eine Drosselstelle einschließenden Durchströmweg zwischen den Kammern mit einem möglichst großen Verhältnis von Länge zu Querschnittsweite auszubilden, um mit den dynamischen Vorgängen um die mit hoher Geschwindigkeit und schnellen Richtungswechseln pendelnde Flüssigkeitsströmung ein breites Frequenzspektrum günstig beeinflussen zu können. Zu diesem Zweck ist nach einem bekannten Vorschlag (DOS 3 019 337) der Durchströmweg als eine in die Trennwand eingearbeitete spiralige Ausnehmung mit beiderseits tangential in die beiden Gehäusekammern mündenden Austrittsöffnungen ausgebildet. Wenn sich diese Konstruktion hinsichtlich ihrer Funktion auch gut bewährt hat, ist sie wegen der notwendigen mechanischen Bearbeitung doch nur mit vergleichsweise hohem Aufwand herzustellen. Der Erfindung liegt demgegenüber als Aufgabe zugrunde, eine den bekannten Einrichtungen zumindest gleichwertige Dämpfung für elastische Lagerungssysteme mit beträchtlich vermindertem konstruktiven Aufwand zu erzielen.

Nach der Erfindung ist zum Lösen dieser Aufgabe für Lager der eingangs geschilderten Gattung vorgesehen, daß der Durchströmweg eine einen wesentlichen Flächenanteil der Trennwand einnehmende Hohlkammer mit einem tangentialen oder angenähert tangentialen Einlaß für die von den Federelementen verdrängte Dämpfungsflüssigkeit an ihrem Außenumfang und einem axialen oder angenähert axialen Auslaß in ihrem Mittenbereich einschließt. Die Hohlkammer kann dabei von einer dosenartig überdeckten Querschnittsvertiefung der Trennwand gebildet sein. In weiterer Ausführung des Erfindungsgedankens ist der Einlaß für die Dämpfungsflüssigkeit zweckmäßig von einem über einen Bruchteil des Umfanges der Hohlkammer spiralig geführten, einerseits in etwa Tangentialrichtung nach der Hohlkammer und andererseits über eine Bohrung in der Trennwand, und zwar in der den Gummi-Federelementen zugekehrten Oberfläche, nach dem Gehäuseinnern offenen Umfangskanal gebildet. Hiervon ausgehend, ist der Auslaß der Hohlkammer von einer im Mittenbereich der Trennwand in deren den Gummi-Federelementen abgekehrter Oberfläche angebrachten Bohrung gebildet.

Die Erfindung erzielt den angestrebten Tilgereffekt der Dämpfungsvorrichtung mit überraschend einfachen Mitteln. Anstelle einer aufwendig einzubringenden, praktisch stets auch eine zweigeteilte Ausführung der Trennwand voraussetzenden spiraligen oder ähnlich durchlaufenden Bohrung ist eine einzige in sich geschlossene und aufgrund ihrer Hohlzylindergestalt sehr viel leichter einzurichtende Kammer vorgesehen, die das wesentliche Element des Durchströmweges für die Dämpfungsflüssigkeit bildet und dieser mit der besonderen Anordnung ihrer beiderseitig nach den Gehäusekammern offenen Zugänge eine Rotationsbewegung mit vom Umfang zur Kammermitte hin sich spiralig verengendem Verlauf -und ähnlich in umgekehrter Richtung -aufzwingt. Das im Vergleich beispielsweise zu einer Bohrung große Volumen der Hohlkammer hat die Verschiebung verhältnismäßig großer Flüssigkeitsmengen mit jeweils hohen Strömungsgeschwindigkeiten zur Folge und begründet die im Endeffekt erzielbare verbesserte Dämpfung.

Die Erfindung ist anhand der schematischen Darstellung eines Ausführungsbeispiels in der Zeichnung verdeutlicht. Es zeigen:

Fig. 1 ein Motorlager im Querschnitt;

Fig. 2 die in dem Lager nach Fig. 1 verwendete Trennwand in Draufsicht in vergrößertem Maßstab und

Fig. 3 einen Querschnitt durch die Trennwand nach Fig. 2.

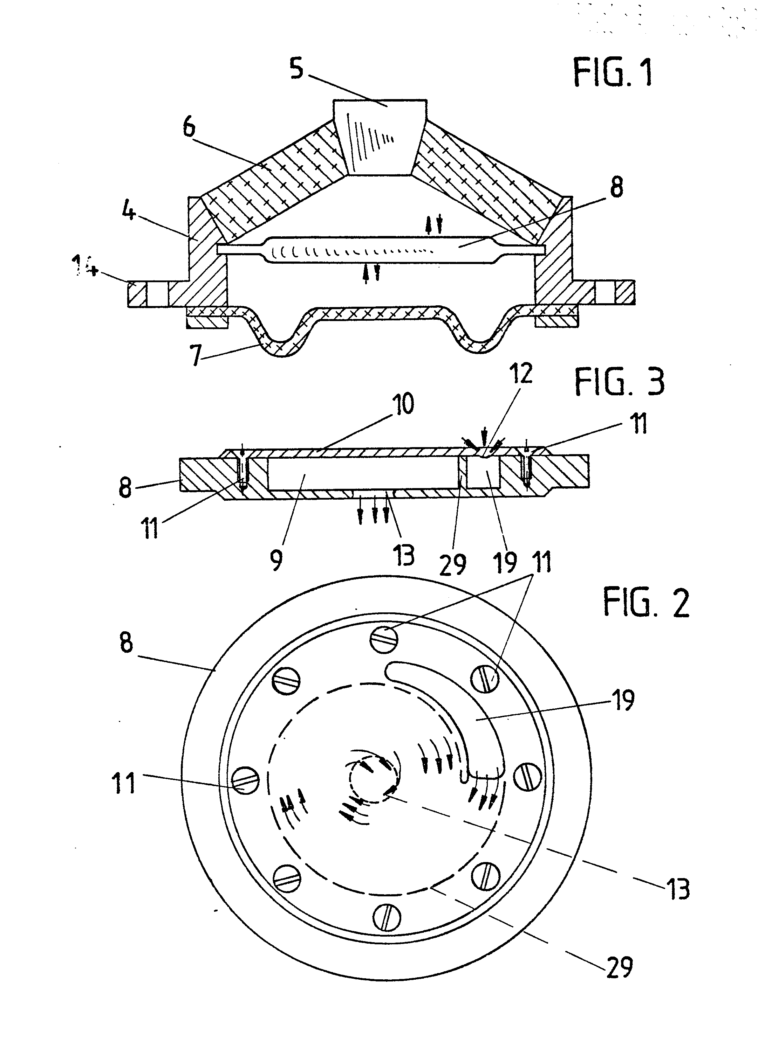

Das in Fig. 1 gezeichnete Lager besteht aus einem ringförmigen Gehäuse 4 mit Befestigungsflansch 14 und einem Anschlußstück 5, die beide durch eine festhaftend mit ihnen verbundene stumpfkegelige Gummifeder 6 elastisch gegeneinander abgestützt sind. Im Gebrauchszustand ist es mit Hilfe des Gehäuseflansches 14 fest an einem tragenden Karosserieteil eines nicht weiter dargestellten Kraftfahrzeuges angebracht, während der Anschlußteil 5 zum Aufnehmen der anteilmäßigen Motorlast dient. Das Gehäue 4 ist nach oben durch die Gummifeder 6, nach unten aber durch eine biegsame Membran 7 abgeschlossen, und sein mit einer hochviskosen Dämpfungsflüssigkeit vollständig gefüllter Innenraum ist durch eine mit Axialspiel in die Gehäusewandungen eingesetzte starre Trennwand 8 in zwei Kammern 24, 34 unterteilt. Beide Kammern 24, 34 stehen über einen gedrosselten Durchströmweg durch die Trennwand 8 -in der Zeichnung durch Richtungspfeile angedeutet - ständig untereinander in Verbindung.

Die Zeichnung veranschaulicht in vereinfachter Darstellung das Funktionsprinzip eines hydraulisch gedämpften elastischen Motorlagers: Beim Einfedern der Gummifeder 6 wird Dämpfungsflüssigkeit aus der Kammer 24 in die aufgrund des Abschlusses durch die Membran 7 ebenfalls volumenveränderliche untere Kammer 34 verdrängt, wobei die rheologischen Parameter durch die Auslegung und Dimensionierung des Durchströmweges zwecks Abstimmung eines günstigen Verhältnisses zwischen erreichbarer Dämpfung und erwünschter Geräuschisolierung beeinflußt werden können. Die Beschaffenheit des Durchströmweges unabhängig von anderen Einzelheiten des jeweiligen Lagersystems bildet den Gegenstand der vorliegenden Erfindung.

Gemäß der Darstellung in Fig. 2 und 3 ist die Trennwand 8 mit einer zylindrischen Hohlkammer 9 hergestellt. Die mit einem großen Flächenanteil der Trennwand zusammenfallende Hohlkammer ist vorteilhaft von einer im Herstellungszustand offenen Querschnittvertiefung der Trennwand etwa in Form einer runden Dose gebildet und mit einem nachträglich aufgesetzten und durch Kopfschrauben 11 dichtend befestigten Deckel 10 abgedeckt. Über eine Ausnehmung 12 in dem Deckel 10 am Außenumfang steht sie mit der Gehäusekammer 24 und über eine zentrische oder nur wenig ausmittige Bohrung 13 in der unteren Trennwand-Oberfläche mit der Kammer 34 in Verbindung. Die in ihren Umrissen etwa nierenförmige Umfangsausnehmung 19 ist dem Verlauf der Hohlkammer-Wandung angeglichen und öffnet in Tangentialrichtung nach dem Kammerinnenraum hin, so daß die hindurchgepreßte Dämpfungsflüssigkeit für ihren freien Strömungsweg schon von vornherein einen Drehimpuls erhält. Durch eine nach Art einer Schneckenwindung eingesetzte Führung 29 kann die Tendenz zu dem erwünschten spiraligen Verlauf der Strömung noch verstärkt werden.

Die Richtungspfeile in Fig. 2 und 3 geben den Flüssigkeitsaustausch aus der Kammer 24 in die Kammer 34 beim Einfedern des Lagers an. Die gleichen Vorgänge laufen mit entsprechenden Änderungen aber auch in umgekehrter Richtung beim Ausfedern ab.

## Ansprüche

1. Hydraulisch gedämpftes elastisches Lager für Motoren, Maschinen, Geräte u. dgl., insbesondere für den Antriebsmotor in Kraftfahrzeugen, mit einem von gummielastischen Federelementen abgedeckten und durch eine einen Durchströmweg aufweisende Trennwand in zwei mit einer Dämpfungsflüssigkeit gefüllte und wechselweise volumenverändliche Kammern unterteilten Gehäuse, dadurch gekennzeichnet, daß der Durchströmweg eine einen wesentlichen Flächenanteil der Trennwand (8) einnehmende Hohlkammer (9) mit einem tangentialen oder angenähert tangentialen Einlaß (12) für die von den Federelementen (6) verdrängte Dämpfungsflüssigkeit an ihrem Außenumfang und einem axialen oder angenähert axialen Auslaß (13) in ihrem Mittenbereich einschließt.

2. Lager nach Anspruch 1, dadurch gekennzeichnet, daß die Hohlkammer (9) von einer dosenartig überdeckten Querschnittvertiefung der Trennwand (8) gebildet ist.

3. Lager nach den Ansprüchen 1 und 2, dadurch gekennzeichnet, daß der Einlaß für die Dämpfungsflüssigkeit von einem über einen Bruchteil des Umfanges der Hohlkammer (9) spiralig geführten, einerseits in etwa Tangentialrichtung nach der Hohlkammer und andererseits über eine Bohrung in der Trennwand (8) nach dem Gehäuseinnern offenen Umfangskanal (12) gebildet ist.

4. Lager nach Anspruch 3, dadurch gekennzeichnet, daß die Einlaßbohrung in der den Gummi-Federelementen (6) zugekehrten Oberfläche der Trennwand (8) vorgesehen ist.

5. Lager nach den Ansprüchen 1 bis 4, dadurch gekennzeichnet, daß der Auslaß der Hohlkammer (9) von einer im Mittenbereich der Trennwand (8) in derer den Gummi-Federelementen (6) abgekehrter Oberfläche angebrachten Bohrung (13) gebildet ist.

FIG. 1

FIG. 3

FIG. 2